Europäisches Patentamt

European Patent Office

Office européen des brevets

(11) Publication number: **0 208 659**
**A1**

## (12) EUROPEAN PATENT APPLICATION

(21) Application number: **86830131.8**

(22) Date of filing: **19.05.86**

(51) Int. Cl.⁴: **B 60 N 1/02**

(30) Priority: **21.06.85 IT 5353385 U**

(43) Date of publication of application:
**14.01.87 Bulletin 87/3**

(84) Designated Contracting States:
**DE FR GB SE**

(71) Applicant: **FIAT AUTO S.p.A.**
**Corso Giovanni Agnelli 200**
**I-10135 Torino(IT)**

(72) Inventor: **Barbiero, Roberto**
**Strada Vivero 15 bis**
**I-10024 Moncalieri (Torino)(IT)**

(72) Inventor: **Acuto, Giovanni**
**Via Dante di Nanni 16/5**
**I-10043 Orbassano (Torino)(IT)**

(74) Representative: **Bosotti, Luciano et al,**
**c/o Jacobacci-Casetta & Perani S.p.A. Via Alfieri, 17**
**I-10121 Torino(IT)**

(54) Motor vehicle seat, particularly for motor cars.

(57) The seat includes a support structure (2) mounted on the floor of the passenger compartment of the vehicle and a seating unit (3) mounted on the support structure (2).

The lower part (10) of the support structure (2) has a configuration complementary to the configuration of the floor (P) of the passenger compartment of the vehicle. For connecting the seating unit (3) to the support structure (2) engagement members (13, 14) are used arranged according to a standard geometric configuration, independent of the characteristics of the floor (P) of the vehicle. A single type of seating unit (3) can thus be mounted on different types of vehicles.

FIG. 1

EP 0 208 659 A1

## Motor vehicle seat, particularly for motor cars.

The present invention relates to motor vehicle seats and particularly concerns a seat intended for mounting on a part of the floor of the passenger compartment of a motor vehicle having a predetermined geometric configuration.

The seat according to the invention is characterised in that it comprises:

- a support structure having a lower part intended to face the passenger compartment floor and provided with first members for engagement with the floor itself disposed in a first geometric configuration complementary with that of the predetermined geometric configuration, and an upper part intended to face upwardly and provided with second engagement members disposed in a second geometric configuration which is functionally independent of the first geometric configuration and the predetermined geometric configuration, and

- a cushion and a back together defining a seating unit having a respective lower part intended to face the upper part of the support structure and provided with third engagement members for cooperating with the second engagement members and disposed in a third geometric configuration complementary with the second geometric configuration.

The functional advantages which can be achieved by the seat according to the invention can be traced essentially to the fact that the seating unit (that is the combined cushion and back) constitutes an independent element whose geometric characteristics (particularly with regard to the arrangement of the members for attachment to the floor) are completely unrelated to the geometric characteristics of the

- 2 -

unrelated to the geometric characteristics of the region of the floor on which the seat is mounted.

It is thus possible to envisage a criterion of use of the seat which enables the user to replace the seating unit by a different seating unit, for example by mounting two different seating units during the cold season and during the hot season, or to change the seating unit to satisfy a change in taste without the need to replace the entire seat.

The seat according to the invention also allows the prefiguring of a very advanced level of personalisation of the seating unit. For example, a user suffering from a pathological condition or malformation of the torso could provide himself with a seating unit which is precisely adapted to his requirements (for example by the insertion of lumbar support cushions, and the like) with the possibility of transferring it to vehicles of different types, each of which has a respective support structure with engagement members for the seating unit disposed in a unique geometric configuration in all the vehicles.

The seat according to the invention also has advantages in production terms since it allows the manufacture of a single type of seating unit - standardised for vehicles of a certain size category - irrespective of the specific geometric characteristics of the floor of the individual model, with it only being necessary to provide each model of vehicle with its own version of the support structure.

Further characteristics and advantages of the invention will become apparent from the following description, given purely by way of non-limiting example, with reference to the appended drawings, in which:

Figure 1 is a partially-exploded perspective view of a seat according to the invention, and

Figure 2 is a partly cut-away and sectioned side elevational view of the seat of Figure 1.

In the drawings a motor vehicle seat such as, for example, the driver's seat of a motor car is generally indicated 1.

The seat 1 is intended for mounting on a part P of the floor of the passenger compartment of the motor vehicle itself.

The floor portion P has a geometric configuration which in general depends on its position in the passenger compartment floor as a whole (left or right side, front or rear location), on the dimensions of the passenger compartment floor, and on the structure of the floor itself.

By way of example, reference is made here to a region of floor P which, in the zone for receiving the seat 1, is generally inclined with a decrease in height from the front end to the rear end of the vehicle.

This representation is purely by way of example since very different floor conformations are found in motor vehicle production, depending on the structural and dimensional characteristics and the use of the vehicle.

Whatever it may be, the conformation of the part of

- 4 -

the floor P of the passenger compartment on which the seat 1 is mounted is defined - in the present description and in the following claims - as the "predetermined geometric configuration".

Distinguishable as essential parts of the seat 1 are:
        - a support structure 2 which rests directly on the floor P of the passenger compartment, and
        - a seating unit 3 constituted by a sitting plane or cushion 4 and a back 5 provided with a headrest 6.

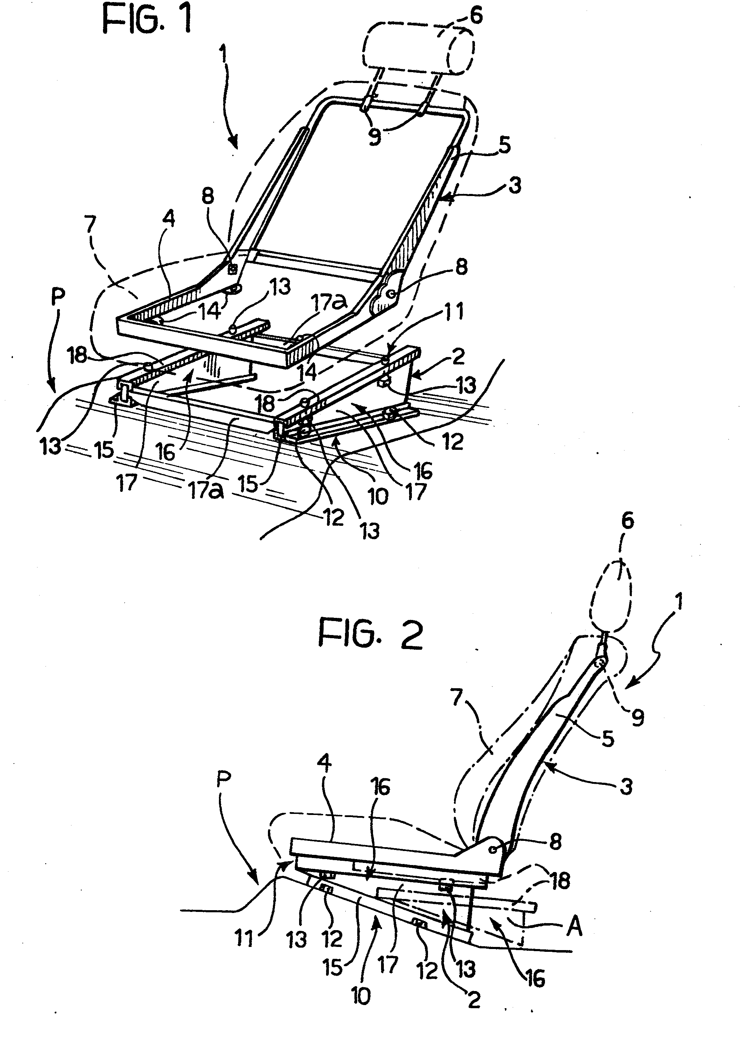

More precisely, only the framework of the cushion 4 and the back 5 have been illustrated in full outline in Figures 1 and 2. The covering of the cushion 4, the back 5 and the headrest 6, that is the so-called padding (or upholstery), has been indicated schematically by a broken line 7 which shows its outline.

In well-known manner, the framework of the cushion 4 and the framework of the back 5 are connected by hinge coupling members 8 located on both sides of the seat 1, and adjustment devices (not illustrated) are associated therewith to allow the amplitude of the dihedral angle defined by the general plane of the cushion 4 and the general plane of the back 5 to be varied selectively.

At the upper end of the framework of the back 5 can be seen two tubular engagement members 9 which act as seats for receiving and retaining the support rods of the headrest 6.

The support structure 2 can be seen to comprise in general a lower part 10 and an upper part 11.

- 5 -

0208659

The lower part 10 is intended to face the floor P and to be fixed thereto in order to ensure the retention of the seat 1 on the structure of the motor vehicle.

For this purpose, the lower part 10 of the structure 2 has a geometric configuration complementary to the geometric configuration of the floor portion P on which the seat is to be mounted.

The conformation of the lower part 10 of the structure 2 is thus strictly dictated by the geometric configuration of the floor portion P to which it must be adapted.

In particular, the lower part 10 of the structure 2 has associated connecting members constituted, for example, by screws or bolts 12 forming first members for engagement of the seat 1 with the floor P.

In order to be functionally effective, these first engagement members must be arranged in a geometric configuration (defined in the following claims as the "first geometric configuration") complementary with the geometric configuration of the floor P of the passenger compartment. In other words, it is not usually possible to think of the disposition of engagement members 12 used for one model or one version of a motor vehicle as being usable directly in a vehicle of larger or smaller size or in a different version of the same vehicle.

The upper part 11 of the support structure 12, however, is provided with other engagement members, constituted in this case by screws or bolts 13, which enable the seating unit 3 to be fixed to the support structure 2.

- 6 -

The screws or bolts 13 (constituting the "second engagement members " of the seat) differ from the screws or bolts 12 (first engagement members) which must be arranged in a geometric configuration complementary with that of the floor P of the passenger compartment floor P, in that they are arranged in a geometric configuration which can be chosen so as to be entirely independent of the geometric configuration of the floor P and of the configuration in which the screws or bolts 12 are arranged.

Consequently, the geometric configuration in which the second engagement members 13 are arranged (defined as the "second geometric configuration" in the claims which follow) can be chosen in a standardized manner for motor vehicles of different types.

In its turn, the cushion 4 is provided with third engagement members which, in the embodiment illustrated, are shown in the form of tabs 14 projecting inwardly of the framework of the cushion 4 and provided with holes for receiving the screws or bolts 13.

Naturally, the third engagement members 14 are disposed in a geometric configuration (defined as the "third geometric configuration" in the following claims) complementary with the geometric configuration in which the second engagement means 13 provided in the upper part 11 of the support structure 2 are arranged.

This means that a single seating unit 3 may easily be mounted in motor vehicles of different types as long as they are provided with support structures 2 in accordance with the invention at the positions of mounting of the seats.

In fact, the complementary geometric distribution of the engagement members 13 and 14, chosen so as to be entirely independent of the geometric characteristics of the floor P of different types of vehicles, ensures that the seating unit 3 is always adapted to the upper part 11 of the support structure 2 mounted on the different vehicle models.

Preferably, the engagement members 13 and 14 are connected together releasably (as in the case of the bolts 13 screwed into the holes in the tabs 14) whereby the seating unit 3 can easily be removed from the motor vehicle to leave only the support structure 2 in the position of mounting.

In addition to the advantages mentioned already in the introduction to the present specification (the possibility of replacement of a seating unit in dependence on the climatic conditions or to satisfy changes in taste, the possibility of using a single highly personalised seating unit in different motor vehicles, and greater efficiency in the production process), the seat offers further advantages resulting from the possibility of removal of the seating unit 3 during cleaning or maintenance of the passenger compartment of the motor vehicle. For example, the fitting and removal of the carpet normally provided on the floor P of the passenger compartment, the cleaning of the floor underneath the cushion 4, and the cleaning of the seating unit 3 itself, which can easily be removed from the vehicle and transferred to an environment in which cleaning equipment such as vacuum cleaners and the like are available, are considerably facilitated.

As indicated above, the adjustment of the orientation of the back 5 relative to the cushion 4 is achieved by means of control devices associated with the hinge members 8 between the framework of the two main elements of the seating unit 3.

To advantage, the adjustment of the longitudinal position and the height of the seat, and possibly the forward tilting of the seat itself, however, may be achieved - with simplification of the structure of the seating unit 3 - by means of adjustment devices (and tilting devices) associated with the support structure 2 and not connected kinematically to the adjustment devices for the orientation of the cushion 4 and the seat 5.

For this purpose, the present description refers, purely by way of example, to a support structure 2 comprising:
- a pair of upwardly-open guide channels 15 fixed to the floor P by the screws or bolts 12 so as to be generally inclined with an inclination corresponding to that of the floor P itself,
- a central slide member 16 comprising two triangular trapezoidal sides 17 interconnected by cross members 17a, and
- a pair of upper guide channels 18 which can be connected to the seating unit 3 by the screws or bolts 13 engaging in holes in the tabs 14.

Each side 17 of the slide member has a lower edge slidably engaged in one of the guides 15 and an upper edge, which is substantially horizontal, slidably engaged in the overlying upper guide 18.

The arrangement is such that the longitudinal position of the seat member 2 may be varied within a wide range of adjustment by the sliding of the sides 17 of the slide member 16 within the lower guides 15 and/or the sliding of the guides 18 connected to the seating unit 3 on the upper edges of the sides 17 themselves.

As a result of the generally inclined disposition of the guides 15, the sliding of the sides 17 within the guides 15 involves, in addition to a longitudinal movement, a variation in the height of the upper part 11 of the support structure 2 of the seating unit 3.

The outline of one of the sides 17 and the guide 18 overlying it, which have been moved towards the rear of the vehicle to cause a rearward movement and simultaneous lowering of the seating unit 3, is illustrated schematically by chain lines and indicated A in Figure 2. The rearward movement and lowering of the seating unit 3 allows the position of the unit itself to be adapted to the anthropometric characteristics of a tall driver or passenger.

Naturally, the scope of the present invention also extends to models which allow equal utility to be achieved with the use of the same innovative concept, and in particular to those seat models in which the support structure 2 - although keeping the function of an adaptor element between the floor P of the passenger compartment and the seating unit 3 - has a different structural configuration (for example, a configuration which allows the forward tilting of the seat) and to those models in which the engagement members 12, 13 and 14 are formed by structural members different from screws or bolts.

CLAIMS

1. A seat intended for mounting on a part of the floor (P) of the passenger compartment of a motor vehicle having a predetermined geometric configuration, characterised in that it comprises:

- a support structure (2) having a lower part (10) intended to face the passenger compartment floor (P) and provided with first members (12) for engagement with the floor (P) disposed in a first geometric configuration complementary with that of the predetermined geometric configuration, and an upper part (11) intended to face upwardly and provided with second engagement members (13) disposed in a second geometric configuration which is functionally independent of the first geometric configuration and the predetermined geometric configuration, and

- a cushion (4) and a back (5) together defining a seating unit (3) having a respective lower part (4) intended to face the upper part (11) of the support structure (2) and provided with third engagement members (14) for cooperating with the second engagement members (13) and disposed in a third geometric configuration complementary with the second geometric configuration.

2. A seat according to Claim 1, characterised in that the second engagement members (13) and the third engagement members (14) are coupled together releasably.

3. A seat according to Claim 1 or Claim 2, characterised in that the support structure (2) includes first adjustment members (15, 17, 18) for selectively varying at least one of the longitudinal position and the height of the upper part (11) of the support structure (2) relative to the floor (P) of the passenger compartment of the motor vehicle, in that the seating unit (3) has associated second adjustment members (8) for adjusting the relative position of the cushion (4) and the back (5), and in that the first adjustment members (15, 16, 18) and the second adjustment members (8) are not connected kinematically.

FIG. 1

FIG. 2

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 222 386 (BURGER) * Page 7, line 29 - page 10, line 7; figures * | 1-3 | B 60 N 1/02 |
| X | FR-A-1 382 039 (DAIMLER-BENZ) * Page 1, right-hand column, line 3 - page 2, left-hand column, line 34; figures * | 1,2 | |
| A | US-A-3 944 283 (MOLZON) | | |
| A | GB-A- 259 364 (MARSHALL) | | |
| A | FR-A-2 129 678 (CHRYSLER) | | |
| A | EP-A-0 028 564 (FAURE) | | **TECHNICAL FIELDS SEARCHED (Int. Cl 4)** |
| | | | B 60 N 1/00 |
| A | US-A-3 810 675 (FERRARA) | | |
| A | US-A-3 456 912 (ELLENBERGER) | | |
| A | FR-A-2 417 409 (HAMMERSTEIN) | | |

The present search report has been drawn up for all claims

| Place of search | Date of completion of the search | Examiner |
|---|---|---|
| THE HAGUE | 09-10-1986 | HORVATH R.C. |